(19) **Europäisches Patentamt**

**European Patent Office**

**Office européen des brevets**

(11) **EP 1 734 703 A1**

(12) **EUROPEAN PATENT APPLICATION**

(43) Date of publication:
20.12.2006 Bulletin 2006/51

(51) Int Cl.:
*H04L 12/56* (2006.01)

(21) Application number: 05012907.1

(22) Date of filing: 15.06.2005

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **MATSUSHITA ELECTRIC INDUSTRIAL
CO., LTD.
Kadoma-shi, Osaka 571-8501 (JP)**

(72) Inventors:
• **Cooper, David
Newbury (GB)**
• **Dhanda, Mungal
Slough (GB)**

(74) Representative: **Grünecker, Kinkeldey,
Stockmair & Schwanhäusser
Anwaltssozietät
Maximilianstrasse 58
80538 München (DE)**

(54) **Fast time slot allocation in GPRS networks**

(57) A method in a packet switched time division multiple access communication system, wherein time slots of a radio frame are assigned by a network for potential use by a mobile station. The method comprises the steps of signalling to the network a packet resource request for an assignment of uplink resources for transmission of data on the uplink. Further, the mobile station determines the number of remaining data blocks to be transmitted on uplink and in case the determined number of data blocks to be transmitted is within an allowable range determined by the network, it transmits an indication of the determined number of remaining data blocks to the network.

Figure 3

**Description**

The present invention relates to a method, mobile terminal and base station in a packet switched time division multiple access communication system, e.g. the GSM radio system and its extension to general packet radio service (GPRS).

The Global System for Mobile Communications (GSM) radio system and its extension to GPRS employs "time division duplexing" to ensure that the radio transceiver in the mobile station is not required to transmit and receive simultaneously. This simplifies the design of the radio. This "time division duplexing" is achieved by dividing available time into "time-slots", some of which are assigned for the purpose of radio transmission and some for reception. This invention is particularly concerned with the assignment of timeslots in the GPRS system described in TS 3GPP 43.064 "General Packet Radio Service (GPRS); Overall description of the GPRS radio interface; Stage 2".

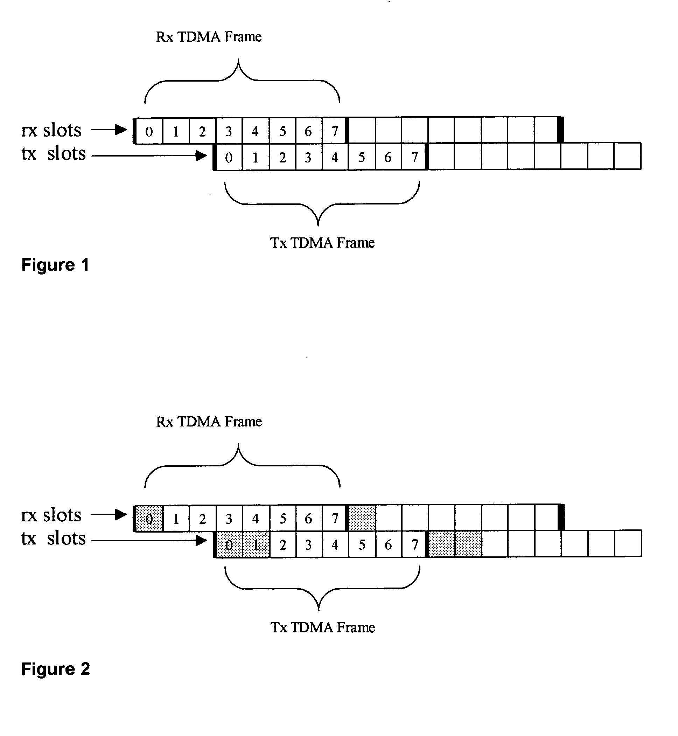

GSM circuit switched telephony employs 8 time-slots per Time Division Multiple Access (TDMA frame), of which one is used for transmission, one for reception. The slot used for transmission is separated from the slot used for reception by a time interval of three slots (see Figure 1). The figure also illustrates the convention for slot numbering; the numbering of Rx slots and Tx slots ensures that the same "slot number" is used in both downlink and uplink, for example slot 0.

The GPRS system is an extension of the basic GSM system which is used for "packet switched " communications. It allows an increased data rate during packet data transfer by using more than one timeslot either for transmission or reception. For example, Figure 2 illustrates a GPRS system where, in this particular example, two slots are used for transmission and one for reception. GPRS allows the number of uplink slots and downlink timeslots to vary according to constraints determined by the mobile and the availability of timeslots.

Due to the bursty and discontinuous nature of data transmission it is highly desirable to allow different mobiles to multiplex the use of a given timeslot between different mobiles. GPRS supports this both for uplink or downlink communications.

To allow sharing of the uplink, the base station transmits a "USF" (Uplink State Flag) value on the downlink to indicate which uplink timeslots a given mobile is allowed to transmit on during the next radio block. All interested mobiles decode this value and at most a single indicated mobile is allowed to transmit a given timeslot.

To allow sharing on the downlink, all data sent on a given timeslot is tagged with an address (called TFI, "temporary flow identity") which indicates to which mobile the data is destined. All interested mobiles decode the address in the data and only the addressed mobile uses the data.

A problem arises when a mobile, which temporarily has no requirement to transmit data on the uplink, and therefore has only a small and possibly intermittent allocation of uplink capacity, suddenly wishes to transmit a larger quantity of data on the uplink. This may for example occur when a user of the mobile makes a request for a web page, in which case the mobile needs to repetitively send a "page request" to the network, scan the received object, and possibly send further requests; the faster each request can be transmitted from the mobile, the faster it can be serviced by the network. For a single web page download, many page requests need to be made depending on how many objects are in the page. Each individual request is sent autonomously by the mobile, without prompting from the network, and the network cannot predict the arrival of requests.

At present the 3GPP standards define the extended uplink Temporary Block Flow (TBF) mode (TS 44.060 section 9.3.1b), in which an uplink TBF may be maintained during temporary inactive periods, where the mobile station has no Radio Link Control (RLC) information to send. During this time of inactivity the network typically allocates a small amount of uplink capacity to the mobile in order that the mobile can signal the need for uplink resources when it next has a requirement to transmit data on the uplink.
A typical HTML page request can occupy 376 octets. In GPRS, this is segmented in into "RLC" frames. One RLC frame is transmitted per radio block period (i.e. 20ms) on each allocated uplink timeslot. Depending on the coding scheme, the amount of data in each RLC frame ranges from 22 to 52 octets in GPRS, and 22 to 148 octets in EGPRS, so to transmit the HTML request requires anything from 3 to 18 RLC frames.

For example, if only 3 RLC frames remain, then the mobile only needs 3 timeslots; to allocate 4 would waste resources. But if 18 RLC frames remain, a class 12 mobile could use all of its maximum of 4 uplink timeslots.

The object of the present invention is therefore to provide a method, a mobile terminal and a base station in a packet switched time division multiple access communication system, wherein an allocation of time slots does not result in wasting resources on the uplink and which allows to assign resources in a fast and reliable manner.

This object is solved by a method as set forth by the subject matters of the independent claims.

According to the invention, the mobile station determines the number of remaining data blocks to be transmitted on uplink. In case the determined number of data blocks to be transmitted is within an allowable range determined by the network, it transmits an indication of the determined number of remaining data blocks to the network.

Consequently, the mobile indicates how many uplink time slots it will actually use to transmit the rest of the amount of data as rapidly as possible. In this manner, a waste of resources is avoided, as the mobile will tell the network exactly how much data it has to send without taking up too much resources. Further, the mobile is able to use the assigned resources very quickly.

The advantages of the invention will be appreciated by a skilled person, in that for the user, the data download time during highly interactive sessions would be shortened. For the network operator, it provides a more efficient use of uplink resources during multi-slot uplink data transfer with bursty traffic conditions. Finally, also for the mobile terminal, there is a benefit by avoiding unnecessary uplink resource allocation, which is filled with repeated transmissions, resulting in that the battery life is prolonged.

According to a preferred embodiment, the indication, which is transmitted to the network, is a countdown value, which indicates the number of RLC blocks that the mobile needs to transmit. The exact amount of data to be sent is thereby signalled to the network, which can properly allocate the available resources.

According to further preferred embodiments, the countdown value is calculated using at least one of the total number of data blocks currently to be transmitted in the extended uplink TBF mode, the absolute block sequence number of the RLC data block and the number of time slots assigned to the uplink TBF.

The invention will be further understood from the detailed description of the preferred embodiments of the invention with reference to the accompanying figures.

**Figure 1**   shows the basic principle of circuit switched operation of a receive and transmit TDMA frame;

**Figure 2**   illustrates a receive and transmit TDMA frame in GPRS operation using two slots for transmission and one for reception;

**Figure 3**   illustrates a flow chart of the method according to the invention for allocation of optimal resources;

**Figure 4**   is a block diagram illustrating one example of a mobile station, which is adapted to carry out the method of the present invention; and

**Figure 5**   is a block diagram illustrating one example of a base station, which is suitable for carrying out the method of the invention.

At present, there exists the definition of a countdown value (CV) contained in the MAC header as specified in TS 44.060 section 9.3.1. The CV does contain an indication of how much data the mobile expects to transmit, which is computed according to the number of timeslots assigned to the mobile for potential use. The mobile computes the value "as if" all slots assigned for potential use were actually allocated, and on this assumption tells the network how many radio frames would be required to transmit the remaining data. For example, if 4 slots have been assigned per radio frame, and the mobile has 1,2,3, or 4 RLC data blocks to transmit, then it would take 1 radio frame to transmit the required data, and the value of CV would be reported as 1. It is easy to see that for the small amounts of data typically associated with some types of request it would be inefficient to allocate all the assigned slots.

In the 3GPP standards at present, computation of CV is as follows:

$$\text{Let integer } x = round\left(\frac{TBC - BSN' - 1}{NTS \times K}\right).$$

$$\text{then, } CV = \begin{cases} x, & if \ x \leq BS\_CV\_MAX, \\ 15, & otherwise. \end{cases}$$

where the function round() rounds upwards to the nearest integer; and

- TBC = total number of RLC data blocks currently to be transmitted in the TBF.
- BSN' = absolute block sequence number of the RLC data block, with range from 0 to (TBC - 1).
- NTS = number of timeslots assigned to the uplink TBF in the assignment message, with range 1 to 8.
- K = 2 when commanded Modulated Coding Scheme (MCS) is MCS-7, MCS-8 or MCS-9, otherwise K=1,
- BS_CV_MAX is a parameter broadcast in the system information, the division operation is non-integer and results in zero only for (TBC - BSN' - 1) = 0.

Supposing that 4 uplink timeslots are assigned, and consider different situations where the number of RLC data blocks needing transmission is small, as shown in the table 1 below.

**Table 1**

| Number of RLC blocks remaining to transmit (TBC- BSN' -1) | 1 | 2 | 3 | 4 | 5 | 6 | ... |
|---|---|---|---|---|---|---|---|
| Countdown Value | 1 | 1 | 1 | 1 | 2 | 2 | ... |

In this case the *CV* value is set to 1 unless at least 5 or more blocks remain to be transmitted. But this does not accurately indicate to the network exactly how many timeslots the mobile could actually use, avoiding both excessive and wasteful allocation and also deficient allocation. Indeed, to avoid either waste or transmission delay, a class 12 mobile, capable of transmission on 4 uplink timeslots, would ideally be allocated the following number of timeslots during the next radio block:

**Table 2**

| Number of RLC blocks to transmit | 1 | 2 | 3 | 4 | 5 | 6 | ... |
|---|---|---|---|---|---|---|---|
| Optimal number of uplink timeslots | 1 | 2 | 3 | 4 | 4 | 4 | ... |

But when the number of RLC blocks remaining is 1, 2, 3, 4, the CV is reported as 1 as in the above Table 1, the network cannot determine precisely how many timeslots to allocate.

Therefore, the invention defines a new rule, which applies when the mobile needs to increase the allocation because a small number of RLC blocks need to be transmitted.

In this case CV indicates the number of *RLC blocks* that need to be transmitted in a special situation CV is restricted to the range:

$$BS\_CV\_MAX < CV < 15$$

The number of RLC blocks that the mobile needs to transmit is indicated by the value

$$Y = CV - BS\_CV\_MAX$$

This value Y would be in the range 1 to (14- BS_CV_MAX). If the number of RLC blocks to transmit is larger than this, then the existing rule is applied.

Consequently, when the novel rule is applied, letting *y* be defined as follows:

$$\text{Let } y = round \{ (TBC\text{-}BSN' \text{ -}1)/ K\}$$

When $1 \leq y \leq 14\text{-} BS\_CV\_MAX$, then $CV = y + BS\_CV\_MAX$.
where *TBC, BSN; NTS, K* and *BS_CV_MAX* are as described above.

If *y* does not satisfy the above condition, *CV* is calculated according to the conventional rule. The application of the new rule is recognised by the fact that *CV* takes values that would not be produced using the conventional rule.

The base station interprets the received *CV* and if possible allocates the requested resources as soon as possible.

The *BS_CV_MAX* value has to be set by the network such that it leaves sufficient code points for the mobile to be able to tell the network precisely how many RLC blocks need to transmitted, provided this is a small number.

For the Table 3 below illustrating the calculation of CV in relationship to the number of RLC blocks remaining, the *BS_CV_MAX* value has been assumed to be set by the network to the value 10.

**Table 3**

| Number of RLC blocks remaining to transmit | 1 | 2 | 3 | 4 | 5 | 6 | ...43 | 44 |
|---|---|---|---|---|---|---|---|---|
| Y | 1 | 2 | 3 | 4 | - | - | - | - |
| X | - | - | - | - | 2 | 2 | ...10 | 11 |
| CV | 11 | 12 | 13 | 14 | 2 | 2 | ...10 | 15 |

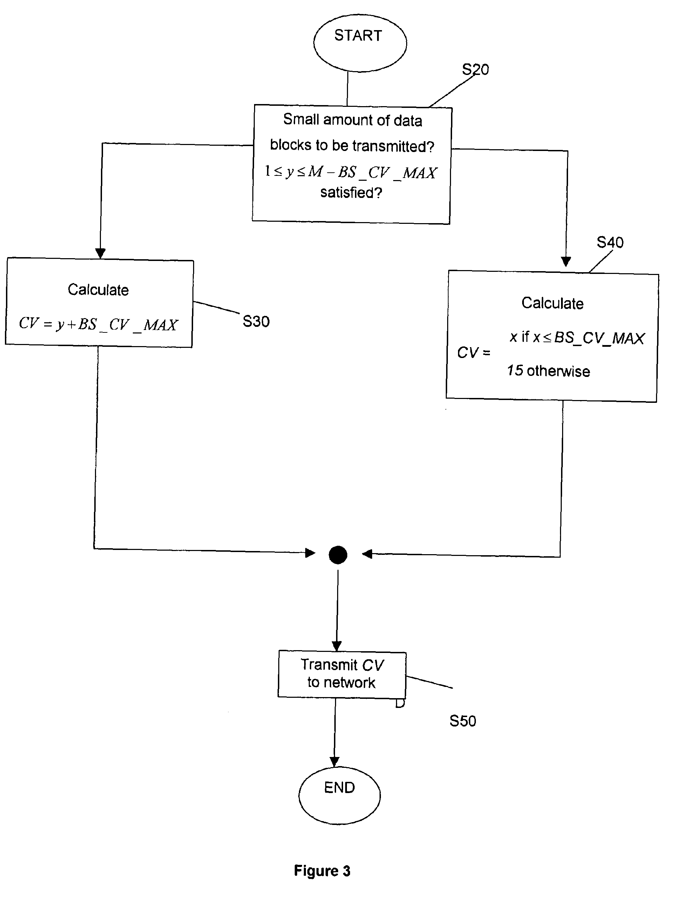

Figure 3 shows the flow chart of operational steps for calculating the *CV* in accordance with the method of the present invention. In the initial stage, the mobile station acquires in step S10 a number of parameters defined above, such as the total number of RLC data blocks currently to be transmitted, the absolute block sequence number of the RLC data block, the number of time slots assigned to the uplink in the assignment message, the integer constant *K* and the parameter *BS_CV_MAX* broadcast in the system information.

In step S20, the mobile station checks whether a small amount of data blocks remains to be transmitted. This is done by checking whether the condition $1 \le y \le 14 - BS\_CV\_MAX$ is satisfied. If so, the flow proceeds with S30 and calculates *CV* as *y+BS_CV_MAX* according to the new calculation rule. If the condition is not satisfied in step S20, i.e. the amount of data blocks to be transmitted is larger than a predetermined amount, the *CV* is calculated according to the conventional rule as indicated in step S40.

Finally, in step S50, the *CV* either calculated according to step S30 or step S40 is transmitted to the network so that the base station can allocate the requested resources as soon as possible.

Note that there is a minimum latency involved in this as the following sequence of events must take place:

(1) mobile requests additional uplink resource (informing that *n* RLC blocks should be transmitted, where *n* is small)- during block B(*i*).
(2) BS decodes request- during block B(*i*+1).
(3) BS sets USF to indicate allocate resources- during block B(*i*+2) at earliest.
(4) BS allocates needed uplink resources- during block B(*i*+3).

It is possible that the BS is able allocated uplink resources during steps (1), (2) and (3) in which case the resource in (4) should be corresponding reduced. This might be the case when the network is lightly loaded, in which case the benefit of the current scheme is lessened. However if the network is busy, and MS was not previously transmitting, it is expected that any available uplink resource would be allocated for other mobiles with data to transmit.

An alternative solution would be to extend the RLC/MAC header so that the MS can indicate to the network exactly how many RLC data blocks it has to send based on the current modulation and coding scheme. For example, 7 bits could be used to indicate how many RLC data blocks the MS has left to transmit and 1 bit for future extension. However, this means that 1 byte will be used for this mechanism and there will be 1 byte less available for the data transmission.

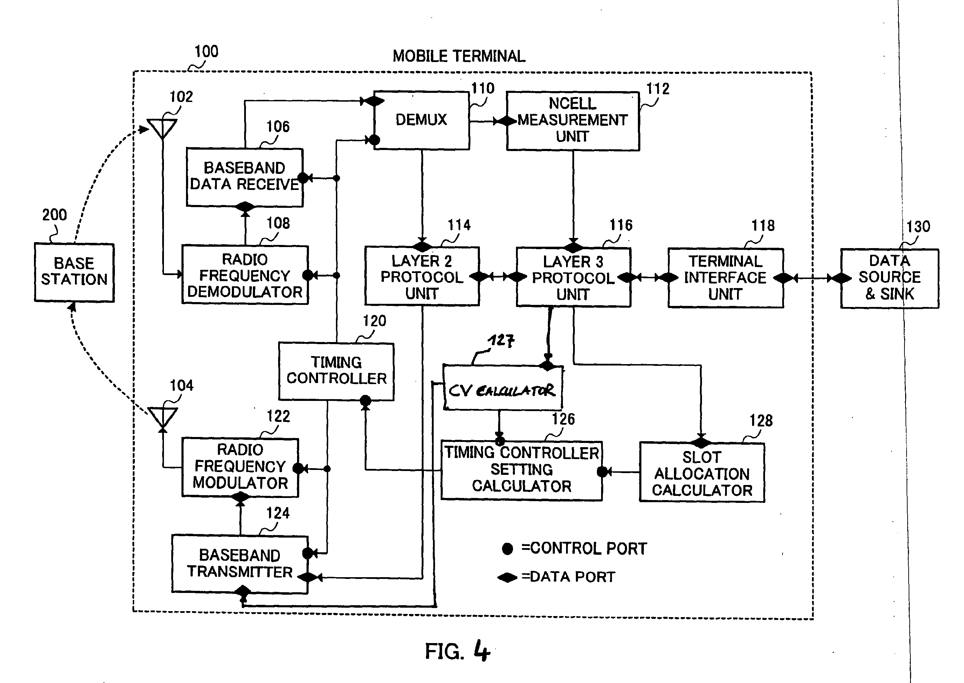

Figure 4 is a block diagram for a mobile station MS1 which is adapted to carry out the present invention.

A mobile station (wireless data communication terminal) 100 allows the bi-directional transfer of data between a base station 200 and an external data source and sink 130.

The base station 200 transmits GPRS signals to the mobile station 100. The GPRS signals are received on the receive antenna 102, and are demodulated to baseband ones by a radio frequency demodulator 108. The radio frequency demodulator 108 delivers the baseband signals to a baseband data receiver 106. The baseband data receiver 106 delivers the received baseband data to a demultiplexer 110. The demultiplexer 110 selects either an NCELL measurement unit 112 or a Layer 2 protocol unit 114 to process the above data, depending on its control input from a timing controller 120.

If the downlink baseband data is destined for the NCELL measurement unit 112, this unit performs adjacent cell signal level measurement, and transmits the resulting information to a Layer 3 protocol unit 116. The Layer 3 protocol unit 116 in turn transmits the data to the base station 200 via the uplink.

Downlink baseband data to be used for adjacent cell signal level measurement is routed to the Layer 3 protocol unit 116. The Layer 3 protocol unit 116 separates user plane data and control plane data. The user data is sent to a terminal interface unit 118. The terminal interface unit 118 sends the data to an external data source and sink 130.

Control plane data is used to perform internal control functions. In particular, any GPRS slot allocation frames sent from the base station 200 are used to send parameter data to a slot allocation calculator 128. The slot allocation calculator 128 calculates which TDMA slots shall be used for data reception, data transmission, and adjacent cell signal level measurement purposes. This information is sent to a timing controller setting calculator 126. The timing controller setting calculator 126 in turn reconfigures a timing controller 120 so as to perform each operation of receive preparation, transmit preparation, and adjacent cell signal level measurement at the correct time.

The timing controller 120 is responsible for determining and controlling the timing of the transmission and reception of signals toward the base station 200, and the reception of measurement data. In accordance with the calculation result of the slot allocation calculator 128, the timing controller 120 controls the precise timing and behavior of the radio frequency modulator 122, radio frequency demodulator 108, baseband data receiver 106, baseband transmitter 124, and demultiplexer 110.

User data transmitted from an external data source and sink 130 is accepted by a terminal interface unit 118, and given to a Layer 3 protocol unit 116. The Layer 3 protocol unit 116 multiplexes the data with any protocol control data, and transmits it via a Layer 2 protocol unit 114. The Layer 2 protocol unit 114 in turn transmits the multiplexed data to a baseband transmitter 124. Subsequently, the multiplexed data is modulated by a radio frequency modulator 122, and then is transmitted over a transmit antenna 104.

As shown in figure 4, a CV calculator unit 127 calculates the countdown value in accordance with the equations as explained above with reference to figure 3. The calculated countdown value is on the one hand, applied to the timing controller setting calculator 126 and to the baseband transmitter 124 for transmission to the base station through antenna 104.

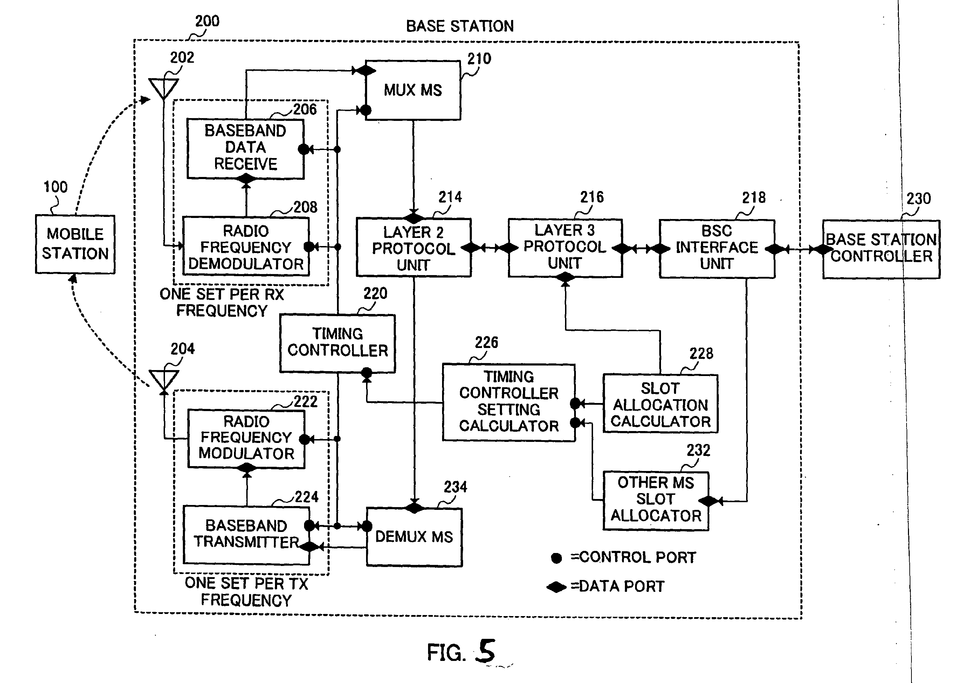

Figure 5 is a block diagram for a base station which is adapted to carry out the present invention.

A wireless base station 200 allows the bi-directional transfer of data between a plurality of mobile stations 100 and an external base station controller (BSC: Base Station Controller) 230.

Each mobile station 100 transmits precisely-timed GPRS signals to the base station 200. The GPRS signals are received on the receive antenna 202, and are demodulated to baseband ones by a radio frequency demodulator 208. The radio frequency demodulator 208 delivers the baseband signals to a baseband data receiver 206. If multiple receive frequencies are used, there is one set of radio frequency demodulator 208 and baseband data receiver 206 per frequency. The baseband data receiver 206 delivers the received baseband data to a multiplexer MS 210. The multiplexer MS 210 marks which MS the data has arrived from depending on its control input from a timing controller 220, and forwards all data including the countdown value received from MS 100 to Layer 2 protocol unit 214. The Layer 2 protocol unit 214 maintains a separate context for each mobile station 100.

Downlink baseband data to be used for adjacent cell signal level measurement is routed to the Layer 3 protocol unit 216. The Layer 3 protocol unit 216 maintains a separate context for each mobile station 100. The Layer 3 protocol unit 216 separates user plane data and radio resource control plane data. User data and radio resource control plane data is sent to a BSC interface unit 218. The BSC interface unit 218 sends the data to an external Base Station Controller 230.

Radio resource control plane data is used to perform internal control functions. In particular, a slot.allocation calculator 228 calculates, typically according to the required data rate and received CV, which GPRS slots are allocated for each mobile station 100. This information is sent to the Layer 3 protocol unit 216. The Layer 3 protocol unit 216 sends allocation information to the mobile station 100. This information is also sent to a timing controller setting calculator 226. In addition, other MS slot allocator 232 receives necessary data from the external Base Station Controller 230 via the BSC interface unit 218, and calculates allocation information for other mobile stations. This information is also sent to the timing controller setting calculator 226. The timing controller setting calculator 226 in turn reconfigures a timing controller 220 so as to perform each of receive and transmit actions towards each mobile station 100 at the correct time.

The timing controller 220 is responsible for determining and controlling the timing of the transmission and reception of signals toward the mobile station 100. In accordance with the calculation result of the slot allocation calculator 228, the timing controller 220 controls the precise timing and behavior of the radio frequency modulator 222, radio frequency demodulator 208, baseband data receiver 206, baseband transmitter 224, multiplexer MS 210, and demultiplexer MS 234.

User data and control data transmitted from a Base Station, Controller 230 is accepted by a BSC interface unit 218, and given to a Layer 3 protocol unit 216. The Layer 3 protocol unit 216 multiplexes the data with any radio resource control data, and transmits it via a Layer 2 protocol unit 214. The Layer 2 protocol unit 214 in turn transmits the multiplexed data to a 15 demultiplexer MS 234. The demultiplexer MS 234 provides the data for each mobile station 100 on the correct TDMA slot to the correct baseband transmitter 224. Subsequently, the data is modulated by a radio frequency modulator 222, and then is transmitted over a transmit antenna 204. If multiple transmit 20 frequencies are used, there is one set of radio frequency modulator 222 and baseband data transmitter 224 per frequency.

**Claims**

1. A method in a packet switched time division multiple access communication system, wherein time slots of a radio frame are assigned by a network for potential use by a mobile station, said method comprising the following steps:

signalling to the network a packet resource request for an assignment of uplink resources for transmission of data on the uplink;

determining, at the mobile station, the number of remaining data blocks to be transmitted on uplink; and

in case the determined number of remaining data blocks to be transmitted is within an allowable range determined by the network transmitting an indication of the determined amount of remaining data blocks to the network.

2. The method according to claim 1, wherein said indication is a countdown value indicating the number of radio link control data blocks that the mobile needs to transmit.

3. The method according to claim 2, wherein the countdown value is contained in the medium access control header.

4. The method according to claim 2 or 3, wherein the countdown value is calculated using the total number of data blocks currently to be transmitted.

5. The method according to one of claims 2 to 4, wherein the countdown value is calculated using the absolute block sequence number of the radio link control data block.

6. The method according to one of claims 2 to 5, wherein the countdown value is calculated using the number of time slots assigned for the uplink transmission.

7. The method according to one of claims 2 to 6, wherein the countdown value is calculated using the nearest integer value of the number of blocks remaining divided by an integer constant $K$.

8. The method according to claim 7, wherein the countdown value is the sum of the nearest integer value and a parameter broadcast BS_$CV\_MAX$ in the system information.

9. The method according to claim 8, wherein the allowable range defined by the network is dependent on the broadcast parameter BS_CV_MAX.

10. The method according to claims 7 and 8 or 9 , wherein the countdown value is calculated under the condition $1 \leq y \leq BS\_CV\_MAX$ as

$$CV = y + BS\_CV\_MAX$$

$$\text{wherein } y = round \left\{ \frac{(TBC - BSN'-1)}{K} \right\}$$

11. A mobile terminal in a packet switched time division multiple access communication system comprising:

reception means (106) for receiving radio signals and an assignment of uplink resources for transmission of data on uplink;

calculating means (127) for determining the number of remaining data blocks to be transmitted on the uplink; and

transmission means (124) for transmitting an indication of the determined number of remaining data blocks to the network in case the determined number of data blocks to be transmitted is within an allowable range determined by the network.

12. The mobile terminal according to claim 11, wherein the calculating means is adapted to calculate a countdown value in accordance with the steps according to claims 2 to 10.

13. A base station in a packet switched time division multiple access communication system, comprising:

reception means (206) for receiving a packet resource request from a mobile station for an assignment of uplink resources for transmission of data on the uplink;

receiving an indication of the determined number of remaining data blocks to be transmitted to the base station from a mobile terminal in case the determined number of data blocks to be transmitted is within an allowable range determined by the network.

14. The base station according to claim 13, wherein the indication of the determined number of remaining data blocks to be transmitted includes a countdown value calculated in accordance with the steps according to claims 2 to 10.

Rx TDMA Frame

rx slots → | 0 | 1 | 2 | 3 | 4 | 5 | 6 | 7 | | | | | | | | | |

tx slots → | 0 | 1 | 2 | 3 | 4 | 5 | 6 | 7 | | | | | | | |

Tx TDMA Frame

**Figure 1**

Rx TDMA Frame

rx slots → | 0 | 1 | 2 | 3 | 4 | 5 | 6 | 7 | | | | | | | | |

tx slots → | 0 | 1 | 2 | 3 | 4 | 5 | 6 | 7 | | | | | | |

Tx TDMA Frame

**Figure 2**

START

S20

Small amount of data
blocks to be transmitted?
$1 \leq y \leq M - BS\_CV\_MAX$
satisfied?

Calculate

$CV = y + BS\_CV\_MAX$

S30

S40

Calculate

$CV = \begin{cases} x \text{ if } x \leq BS\_CV\_MAX \\ 15 \text{ otherwise} \end{cases}$

Transmit *CV*
to network

S50

END

**Figure 3**

FIG. 4

EP 1 734 703 A1

EP 1 734 703 A1

FIG. 5

BASE STATION — 200

MOBILE STATION — 100

ONE SET PER TX FREQUENCY

BASEBAND TRANSMITTER — 224

RADIO FREQUENCY MODULATOR — 222

204

ONE SET PER RX FREQUENCY

RADIO FREQUENCY DEMODULATOR — 208

BASEBAND DATA RECEIVE — 206

202

TIMING CONTROLLER — 220

DEMUX MS — 234

LAYER 2 PROTOCOL UNIT — 214

MUX MS — 210

TIMING CONTROLLER SETTING CALCULATOR — 226

LAYER 3 PROTOCOL UNIT — 216

OTHER MS SLOT ALLOCATOR — 232

SLOT ALLOCATION CALCULATOR — 228

BSC INTERFACE UNIT — 218

BASE STATION CONTROLLER — 230

● =CONTROL PORT
◆ =DATA PORT

12

**European Patent Office**

# EUROPEAN SEARCH REPORT

Application Number

EP 05 01 2907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 021 017 A (NOKIA CORPORATION) 19 July 2000 (2000-07-19) | 1,11,13 | H04L12/56 |
| Y | * column 1, line 3 - line 9 * | 2-9,12, 14 | |
| | * column 1, line 40 - column 2, line 3 * * column 6, line 32 - line 51 * * column 7, line 51 - column 8, line 32 * * column 11, line 14 - column 12, line 12 * * figures 4a,6,7 * ----- | | |
| Y | "Digital cellular telecommunications system (Phase 2+); General Packet Radio Service (GPRS); Mobile Station (MS) - Base Station System (BSS) interface; Radio Link Control / Medium Access Control (RLC/MAC) protocol (3GPP TS 44.060 version 6.12.0 Release 6); ETSI TS 144 060" ETSI STANDARDS, EUROPEAN TELECOMMUNICATIONS STANDARDS INSTITUTE, SOPHIA-ANTIPO, FR, vol. 3-G2, no. V6120, April 2005 (2005-04), XP014028333 ISSN: 0000-0001 * page 132, paragraph 9.3 - page 135, paragraph 9.3.1B.2 * * page 149, paragraph 10.2.2 * * page 153, paragraph 10.3A.4 * * page 156, paragraph 10.4.6 * * page 236, paragraph 11.2.16 - page 238, paragraph 11.2.16 * * page 389, paragraph F - page 390, paragraph F * ----- -/-- | 2-9,12, 14 | |

**TECHNICAL FIELDS SEARCHED (IPC)**

H04L
H04Q

The present search report has been drawn up for all claims

| Place of search | Date of completion of the search | Examiner |
|---|---|---|
| Munich | 14 November 2005 | Rosenauer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 01 2907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 03/034757 A (NOKIA CORPORATION; PARANTAINEN, JANNE; SEBIRE, GUILLAUME) 24 April 2003 (2003-04-24)<br>* page 2, line 21 - line 29 *<br>* page 5, line 35 - page 6, line 24 *<br>* page 10, line 32 - page 11, line 16 *<br>* figures 3,4 *<br>----- | 1-14 | |
| A | WO 02/17573 A (NOKIA CORPORATION; PARANTAINEN, JANNE; FORSSELL, MIKA) 28 February 2002 (2002-02-28)<br>* page 1, line 19 - line 25 *<br>* page 4, line 29 - page 6, line 19 *<br>* page 8, line 8 - line 18 *<br>----- | 1-14 | |

TECHNICAL FIELDS
SEARCHED (IPC)

The present search report has been drawn up for all claims

| Place of search | Date of completion of the search | Examiner |
|---|---|---|
| Munich | 14 November 2005 | Rosenauer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 01 2907

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2005

| Patent document cited in search report | | Publication date | Patent family member(s) | | Publication date |
|---|---|---|---|---|---|
| EP 1021017 | A | 19-07-2000 | AU | 2113600 A | 01-08-2000 |
| | | | BR | 9905907 A | 15-08-2000 |
| | | | CN | 1261244 A | 26-07-2000 |
| | | | CN | 1365200 A | 21-08-2002 |
| | | | CN | 1365237 A | 21-08-2002 |
| | | | FI | 990039 A | 12-07-2000 |
| | | | WO | 0042806 A2 | 20-07-2000 |
| | | | JP | 2000209301 A | 28-07-2000 |
| | | | JP | 2002281565 A | 27-09-2002 |
| | | | JP | 2002320275 A | 31-10-2002 |
| | | | US | 6718179 B1 | 06-04-2004 |
| WO 03034757 | A | 24-04-2003 | AU | 2002210600 A1 | 28-04-2003 |
| | | | BR | 0116241 A | 25-02-2004 |
| | | | CA | 2431123 A1 | 24-04-2003 |
| | | | EP | 1437016 A1 | 14-07-2004 |
| | | | JP | 2004522390 T | 22-07-2004 |
| | | | MX | PA03005391 A | 22-09-2003 |
| | | | US | 2004146036 A1 | 29-07-2004 |
| WO 0217573 | A | 28-02-2002 | AU | 8221801 A | 04-03-2002 |
| | | | BR | 0113413 A | 29-07-2003 |
| | | | CA | 2420953 A1 | 28-02-2002 |
| | | | CN | 1471775 A | 28-01-2004 |
| | | | FI | 20001876 A | 26-02-2002 |
| | | | JP | 2004507932 T | 11-03-2004 |
| | | | US | 2002045458 A1 | 18-04-2002 |
| | | | ZA | 200301451 A | 22-06-2004 |

EPO FORM P0459

For more details about this annex : see Official Journal of the European Patent Office, No. 12/82